# FASCICULE DE BREVET EUROPEEN

(11) **EP 3 050 187 B1**
(45) Date de publication et mention de la délivrance du brevet: **21.06.2017**
(21) Numéro de dépôt: 14784312.2
(22) Date de dépôt: 19.09.2014
(51) Int. Cl.: H02J 3/14, H02M 3/07

(54) **CIRCUIT DE POMPE DE CHARGE DE GENERATION D'UNE TENSION NEGATIVE**
LADUNGSPUMPENSCHALTUNG ZUR ERZEUGUNG EINER NEGATIVEN SPANNUNG
CHARGE PUMP CIRCUIT FOR GENERATING A NEGATIVE VOLTAGE

(30) Priorité: 23.09.2013 FR 1359117
(43) Date de publication de la demande: 03.08.2016
(73) Titulaire: Commissariat à l'Energie Atomique et aux Energies Alternatives, 75015 Paris (FR)
(72) Inventeur: AYEL, François, F-38140 Saint Blaise du Buis (FR)
(74) Mandataire: Thibon, Laurent
(86) Numéro de dépôt international: PCT/FR2014/052334
(87) Numéro de publication internationale: WO 2015/040336

(56) Documents cités:
- EP-A1- 1 791 245
- US-A- 6 130 572
- US-A1- 2004 057 259
- US-A1- 2008 272 833
- US-B1- 6 674 317

## Description

La présente demande de brevet revendique la priorité de la demande de brevet français FR13/59117.

### Domaine

La présente invention concerne de façon générale les circuits électroniques et, plus particulièrement, un circuit de génération d'une tension négative à partir d'une tension d'alimentation positive.

### Exposé de l'art antérieur

On connaît de nombreux circuits de pompe de charge parmi lesquels des circuits destinés à générer une tension négative à partir d'une tension d'alimentation positive. En particulier, on a déjà proposé d'utiliser un transistor à effet de champ pour alimenter, à partir d'une tension positive, un circuit de pompe de charge à capacités commutées. Un exemple de tel circuit est décrit dans l'article "Integrated Anti-Short-Circuit Safety Circuit in CMOS SOI for Normally-On JFET" de Khalil El Falahi et al. (CIPS 2012, Mars, 6-8,2012, Nuremberg Germany). Un transistor JFET, utilisé pour récupérer l'énergie sur un bus d'alimentation positive a sa grille directement connectée à la masse de façon permanente. Ce circuit requiert l'utilisation d'un circuit de précharge en amont du circuit de pompe de charge capacitif.

### Résumé

Un mode de réalisation de la présente description vise à proposer un circuit de génération d'une tension négative à partir d'une tension positive qui pallie tout ou partie des solutions usuelles.

Un autre mode de réalisation de la présente description vise à proposer un circuit compatible avec diverses applications susceptibles d'exploiter une tension négative.

Un autre mode de réalisation de la présente description vise une solution particulièrement simple.

Ainsi, un mode de réalisation de la présente description vise un circuit de génération d'une tension négative à partir d'une tension positive, comportant :
au moins un premier transistor entre une première borne d'application d'un potentiel supérieur à un potentiel de référence et un premier noeud ;
un premier élément capacitif entre le premier noeud et un deuxième noeud, une borne de commande dudit premier transistor étant reliée au deuxième noeud ;
un premier commutateur entre le premier noeud et une deuxième borne d'application du potentiel de référence ;
un deuxième commutateur entre le deuxième noeud et une troisième borne de fourniture de ladite tension négative ;
un troisième commutateur entre le deuxième noeud et la deuxième borne ; et
un deuxième élément capacitif entre la troisième borne et la deuxième borne.

Selon un mode de réalisation, le circuit comporte un premier élément résistif entre la première borne et le premier transistor.

Selon un mode de réalisation, le circuit comporte en outre :
un quatrième commutateur entre la borne de commande du premier transistor et le deuxième noeud ; et
un cinquième commutateur entre la borne de commande du premier transistor et une quatrième borne d'application d'un potentiel supérieur au potentiel de référence.

Selon un mode de réalisation, le circuit comporte en outre :
au moins un deuxième transistor entre ladite première borne et la borne de commande du premier transistor, la borne de commande du deuxième transistor étant reliée au deuxième noeud ; et
un deuxième élément résistif, intercalé entre la borne de commande du premier transistor et le deuxième noeud.

Selon un mode de réalisation, le circuit comporte en outre un troisième élément résistif entre le deuxième transistor et la première borne.

Selon un mode de réalisation, le ou lesdits transistors sont des transistors à canal N.

Selon un mode de réalisation, tous les commutateurs sont des transistors MOS à canal N.

On prévoit également un procédé de commande d'un circuit tel que ci-dessus, dans lequel :
dans une première phase, les premier et deuxième commutateurs sont ouverts tandis que le troisième commutateur est fermé ; et
dans une deuxième phase, les premier et deuxième commutateurs sont fermés tandis que le troisième commutateur est ouvert.

Selon un mode de réalisation, les première et deuxième phases se répètent.

Selon un mode de réalisation, des intervalles de durées inférieures à celles des première et deuxième phases, et dans lesquels tous les commutateurs sont ouverts, sont intercalés entre les phases successives.

Selon un mode de réalisation :
pendant la ou les premières phases, le quatrième commutateur est ouvert et le cinquième commutateur est fermé ; et
pendant la ou les deuxièmes phases, le quatrième commutateur est fermé et le cinquième commutateur est ouvert.

On prévoit également un circuit électronique comportant au moins un circuit de génération d'une tension négative à partir d'une tension positive.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un premier exemple d'application d'un circuit fournissant une tension négative ;
la figure 2 représente, de façon très schématique et sous forme de blocs, un deuxième exemple d'application d'un circuit fournissant une tension négative ;
la figure 3 représente un mode de réalisation d'un circuit de génération d'une tension négative à partir d'une tension positive ;
la figure 4 illustre, sous forme de chronogrammes, le fonctionnement du circuit de la figure 3 ;
la figure 5 représente, de façon très schématique et sous forme de blocs, un exemple de circuit de commande du circuit de la figure 3 ;
la figure 6 représente une variante du circuit de la figure 3 ; et
la figure 7 représente une autre variante du circuit de la figure 3.

### Description détaillée

De mêmes éléments ont été désignés par de mêmes références aux différentes figures. Par souci de clarté, seuls les éléments utiles à la compréhension des modes de réalisation qui vont être décrits ont été représentés et seront détaillés. En particulier, la destination du circuit de pompe de charge décrit n'a pas été détaillée, les modes de réalisation décrits étant compatibles avec les applications habituelles utilisant un circuit de pompe de charge de fourniture d'une tension négative à partir d'une tension positive. De plus, lorsque l'on fait référence au caractère positif ou négatif de la tension, on se réfère à un même potentiel intermédiaire entre la tension positive et la tension négative. Pour simplifier, on considère que ce potentiel de référence est la masse (potentiel nul) du circuit électronique, ce qui sera généralement le cas en pratique, de sorte que les tensions positive et négative correspondent aux potentiels des bornes correspondantes. Toutefois, tout ce qui sera décrit par la suite s'applique à des tensions positive et négative définies par des potentiels, respectivement supérieur et inférieur, à un potentiel de référence qui n'est pas nécessairement la masse (par exemple, des potentiels tous les deux négatifs par rapport à la masse, la masse constituant alors le potentiel supérieur de la tension positive et le potentiel de référence étant le potentiel le moins négatif).

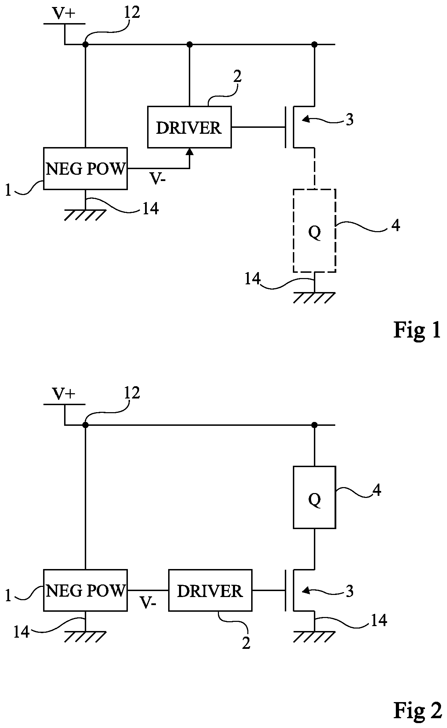

La figure 1 représente, de façon schématique et sous forme de blocs, un exemple d'application d'un circuit de pompe de charge 1 (NEG POW) de génération d'une tension négative V- à partir d'une tension positive V+. Selon cet exemple, la tension négative V- est utilisée pour alimenter un circuit de commande 2 (DRIVER) d'un transistor 3 (typiquement un transistor MOS) en série avec une charge 4 (Q) entre des bornes 12 d'application d'un potentiel positif V+ et 14, par exemple de masse ou correspondant au point haut de la charge. Dans une telle application, les tensions mises en jeu au niveau de la charge 4 et les seuils de commutation du transistor 3 font qu'on a besoin d'un potentiel négatif V- pour commander correctement le transistor 3.

La figure 2 représente, de façon schématique et sous forme de blocs, un autre exemple d'application d'un circuit de génération d'une tension négative V-. La tension V- est, là encore, fournie à un circuit 2 de commande d'un transistor de puissance 3, connecté en série avec une charge 4 (Q) alimentée par une tension positive. Le transistor 3 est ici connecté côté masse. Là encore, selon les tensions mises en jeu et les seuils de commutation du transistor 3, on peut avoir besoin d'un potentiel négatif pour le commander correctement.

Par exemple, la tension négative peut servir à bloquer un interrupteur (transistor 3) ayant un état fermé au repos ("normally-on"). Un autre exemple est la commande d'un transistor de puissance ayant une tension seuil proche de zéro et qui requiert une polarisation de sa borne de commande avec une tension négative pour s'éloigner de sa tension de seuil et éviter que des tensions parasites ne modifient l'état bloqué ou passant. Un autre exemple est la commande d'un transistor IGBT qui utilise parfois une tension négative pour assurer un blocage efficace.

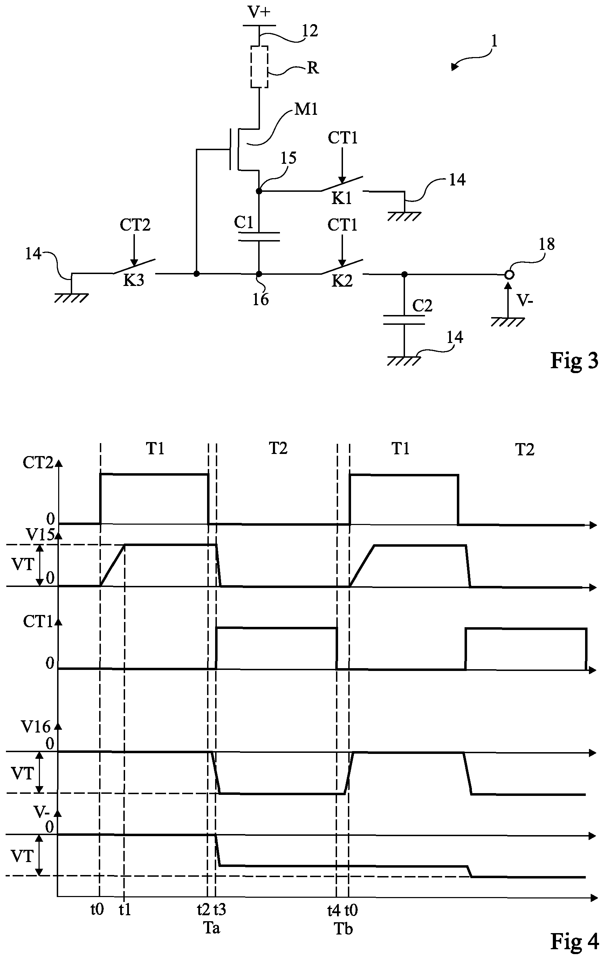

La figure 3 représente un exemple de schéma électrique d'un mode de réalisation d'un circuit 1 de génération d'une tension négative, basé sur une pompe de charge capacitive.

Un transistor M1, typiquement un transistor MOS normalement fermé (normally on) est relié, directement ou par l'intermédiaire d'un élément résistif R (illustré en pointillés), à une borne 12 d'application d'un potentiel V+ positif par rapport à la masse (borne 14). L'autre borne de puissance du transistor M1 est connectée à un noeud 16 par l'intermédiaire d'un premier élément capacitif C1 et, à la borne 14, par un premier commutateur K1. La borne de commande (la grille) du transistor M1 est connectée (reliée directement) au noeud 16. Le noeud 16 est relié, par un deuxième commutateur K2, à une borne 18 de fourniture de la tension de sortie négative V-et, par un troisième commutateur K3, à la borne 14 d'application du potentiel de référence. La borne 18 est par ailleurs connectée à la borne 14 par un deuxième élément capacitif C2. Les commutateurs K1, K2 sont commandés en tout ou rien par un signal CT1. Le commutateur K3 est commandé en tout ou rien par un signal CT3. Ces commutateurs sont, de préférence, des transistors MOS à canal N.

La figure 4 illustre, sous forme de chronogrammes, le fonctionnement du circuit 1 de la figure 3.

Ces chronogrammes représentent respectivement des exemples d'allures du signal CT2, conditionnant l'état ouvert ou fermé de l'interrupteur K3, de la tension V15 du noeud 15 entre le transistor M1 et le condensateur C1, du signal CT1, conditionnant l'état ouvert ou fermé des interrupteurs K1 et K2, de la tension V16 du noeud 16, et de la tension de sortie V-.

En prenant l'exemple préféré de commutateurs K1, K2, K3 constitués de transistors MOS à canal N, et aux tensions seuils près, ces transistors sont rendus passants quand leurs grilles sont connectées à un potentiel positif (états hauts des signaux CT1 et CT2) et sont bloqués quand leurs grilles sont connectées à la masse (états bas des signaux CT1 et CT2).

Pour simplifier, on néglige par la suite les chutes de tension dans les commutateurs K1 à K3 à l'état passant (on considère les résistances drain-source à l'état passant RdsON négligeables).

On suppose un état initialement déchargé des condensateurs C1 et C2 et tous les commutateurs K1 à K3 sont ouverts. La tension V- est alors nulle.

Un cycle de pompe de charge commence à un instant t0 auquel l'interrupteur K3 est fermé (signal CT2 à l'état haut), les interrupteurs K1 et K2 étant ouverts (signal CT1 à l'état bas). Le noeud 15 démarre en étant à la masse. Le transistor M1 étant normalement passant, le potentiel du noeud 15 croît jusqu'à un instant t1 où la tension V15 atteint la tension seuil VT du transistor M1. Cela revient à charger le condensateur C1 jusqu'à la tension de blocage (tension seuil VT) du transistor M1.

Ensuite, on inverse les états des commutateurs pour transférer les charges du condensateur C1 au condensateur C2. En pratique, pour éviter une conduction simultanée des commutateurs, on commence, à un instant t2, postérieur à l'instant t1, par ouvrir l'interrupteur K3 (signal CT2 à l'état bas), puis à un instant t3, postérieur à l'instant t2, on ferme les interrupteurs K1 et K2 (signal CT1 à l'état haut).

Le fait de porter le noeud 15 à la masse, par la fermeture du commutateur K1, provoque la décharge du condensateur C2 et fait descendre le potentiel du noeud 16, donc de la borne 18 (le commutateur K2 étant fermé), générant la tension négative V-.

A un instant t4, postérieur à l'instant t3, on entame une phase de commutation inverse, c'est-à-dire que l'on ouvre les commutateurs K1 et K2 (signal CT1 à l'état bas), puis à un instant postérieur, correspondant à l'instant t0 de début d'un cycle suivant, on ferme l'interrupteur K3.

Dans le montage de la figure 3, la valeur minimale (la plus négative) que peut prendre la tension V- est -VT.

Selon l'énergie prélevée sur la borne 18, cette valeur -VT est atteinte en un ou plusieurs cycles. Dans l'exemple de la figure 4, on suppose que deux cycles sont nécessaires.

La durée de la ou des phases T1, entre les instants t0 et t2, est choisie pour être supérieure à la durée nécessaire à la charge du condensateur C1 au niveau VT. Cette durée est fonction, notamment, de la capacité du condensateur C1 et de la résistance drain-source à l'état passant du transistor M1.

La durée de la ou des phases T2, entre les instants t3 et t4, est choisie pour être supérieure à la durée de recharge du condensateur C1 au travers du transistor M1.

Les durées T1 et T2 ne sont pas nécessairement identiques. Par exemple, une durée T2 plus faible, notamment au démarrage, permet de limiter les appels de courant.

Les intervalles Ta entre les instants t2 et t3, et Tb entre les instants t2 et t3, sont choisis pour garantir une absence de conduction simultanée des commutateurs K1 à K3.

La polarisation du transistor M1 permet de le rendre normalement fermé, ce qui évite un circuit de démarrage.

L'élément résistif R optionnel sert à limiter les appels de courant.

Un avantage du circuit décrit en relation avec les figures 3 et 4 est qu'il est compatible avec une réalisation n'utilisant que des transistors MOS à canal N.

Le fait de rendre commutable le transistor M1 d'alimentation du circuit à capacités commutées économise un circuit de démarrage. De plus, on tire profit d'un des commutateurs utilisés pour commuter les éléments capacitifs pour commuter ce transistor d'alimentation.

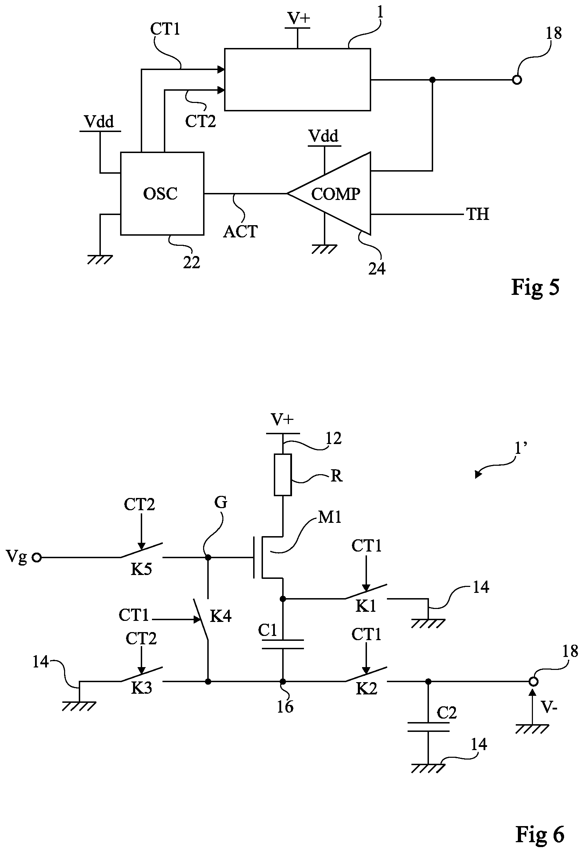

La figure 5 représente, de façon simplifiée et sous forme de blocs, un exemple de circuit de génération des signaux de commande CT1 et CT2.

Dans cet exemple, on utilise un oscillateur 22 (OSC) commandé (activé) par un signal ACT fourni par un comparateur 24 (COMP) entre le niveau de la tension de sortie V- et un seuil TH. Pour le circuit de la figure 3, le seuil TH correspond à un niveau supérieur au niveau -VT pour assurer l'arrêt de l'oscillateur et diminuer ainsi la consommation. A titre d'exemple particulier de réalisation, on pourra utiliser un oscillateur en anneau dont la période conditionne les durées T1 et T2, les signaux CT1 et CT2 étant prélevés en sortie de deux inverseurs différents de l'oscillateur pour définir les intervalles Ta et Tb (alors identiques). L'oscillateur 22 et le comparateur 24 sont alimentés, par exemple, par une tension positive Vdd, non nécessairement identique à la tension V+.

Selon une variante de réalisation, on utilise un générateur mono-impulsion, déclenché lorsque la tension V- n'a pas atteint une consigne TH.

Selon une autre variante de réalisation, on prévoit une régulation analogique qui surveille la tension aux bornes de l'élément capacitif C1 et sa décharge dans l'élément capacitif C2.

Plus généralement, tout circuit adapté à générer des signaux de commande pour respecter les phases de commutation décrites ci-dessus peut être utilisé.

La figure 6 représente un autre mode de réalisation destiné à fournir une tension de sortie V-, inférieure à -VT (supérieure, en valeur absolue, à la valeur absolue de la tension seuil du transistor M1).

Par rapport au circuit de la figure 3, la grille du transistor M1 est en outre reliée, par l'intermédiaire d'un commutateur K4 commandé par le signal CT1, au noeud 16 et, par l'intermédiaire d'un commutateur K5 commandé par le signal CT2, à un potentiel de polarisation Vg supérieur au potentiel de référence (et inférieur au potentiel V+). Les interrupteurs K4 et K5 sont préférentiellement des transistors NMOS. Pendant la phase T1 (figure 4), l'interrupteur K4 est ouvert et l'interrupteur K5 est fermé. Le potentiel Vg, appliqué à la grille du transistor M1, engendre que l'élément capacitif C1 se charge à une tension VT+Vg. Lors de la phase T2 qui suit, l'inversion de la tension engendrée par la commutation capacitive entraîne que la tension V- peut atteindre -Vg-VT. La génération du potentiel Vg à partir de la tension V+ ne pose pas de difficulté (par exemple un pont résistif, de préférence commutable pour éviter une consommation permanente, ou un régulateur de tension).

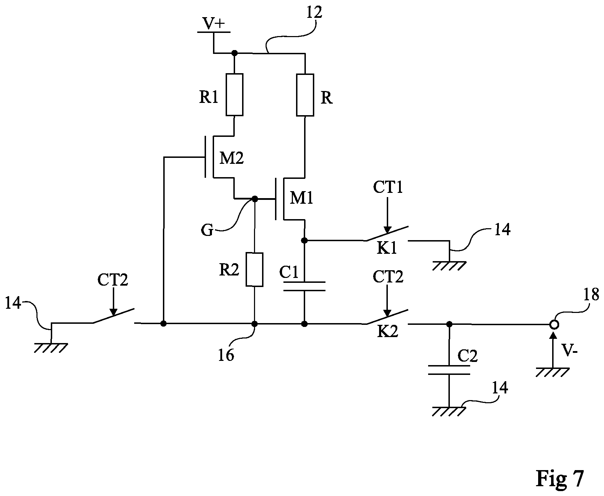

La figure 7 représente un autre mode de réalisation permettant d'atteindre une tension plus négative que -VT.

Par rapport au circuit de la figure 3, un deuxième transistor MOS M2 relie, optionnellement en série avec un élément résistif R1, la borne 12 à la grille du transistor M1, désormais reliée au noeud 16 par un élément résistif R2 (ou capacitif pour réduire la consommation en continu (dc)). La grille du transistor M2 est connectée au noeud 16.

Ainsi, lors de la phase T1 (figure 4), l'élément C1 se charge à une valeur correspondant à la somme des deux tensions seuil des transistors M1 et M2 et la tension négative générée présente en valeur absolue cette valeur.

Le mode de réalisation de la figure 7 peut être étendu à des tensions négatives encore inférieures en ajoutant d'autres transistors sur la base du même montage (entre la grille du transistor M2 et le noeud 16).

Divers modes de réalisation ont été décrits. Diverses variantes et modifications apparaîtront à l'homme de l'art. En particulier, les intervalles temporels Ta et Tb entre les périodes T1 et T2 du circuit de pompe de charge pourront être adaptés aux temps de commutation nécessaires des différents transistors.

De plus, bien que l'on ait fait référence à des transistors MOS côté circuit applicatif, la tension négative générée pourra servir à commander tout type de transistor (IGBT, JFET, etc.) et, plus généralement, à alimenter tout type de circuit requérant une tension négative.

En outre, le dimensionnement des éléments capacitifs C1 et C2, réalisés le cas échéant sous la forme de plusieurs condensateurs en parallèle, dépend de l'application et notamment de la consommation attendue du ou des éléments connectés à la borne 18.

Enfin, la mise en oeuvre pratique des modes de réalisation qui ont été décrits est à la portée de l'homme du métier à partir des indications fonctionnelles données ci-dessus en utilisant, pour le reste, des techniques usuelles de dimensionnement de circuits électroniques.

## Revendications

1. Circuit de génération d'une tension (V-) négative à partir d'une tension positive (V+), comportant :
au moins un premier transistor (M1) entre une première borne (12) d'application d'un potentiel supérieur à un potentiel de référence et un premier noeud (15) ;
un premier élément capacitif (C1) entre le premier noeud (15) et un deuxième noeud (16), une borne de commande dudit premier transistor étant reliée au deuxième noeud (16) ;
un premier commutateur (K1) entre le premier noeud (15) et une deuxième borne (14) d'application du potentiel de référence ;
un deuxième commutateur (K2) entre le deuxième noeud (16) et une troisième borne (18) de fourniture de ladite tension négative ;
un troisième commutateur (K3) entre le deuxième noeud (16) et la deuxième borne (14) ; et
un deuxième élément capacitif (C2) entre la troisième borne (18) et la deuxième borne.

2. Circuit selon la revendication 1, comportant en outre un premier élément résistif (R) entre la première borne (12) et le premier transistor (M1).

3. Circuit selon la revendication 1 ou 2, comportant en outre :
un quatrième commutateur (K4) entre la borne de commande du premier transistor (M1) et le deuxième noeud (16) ; et
un cinquième commutateur (K5) entre la borne de commande du premier transistor (M1) et une quatrième borne (22) d'application d'un potentiel (Vg) supérieur au potentiel de référence.

4. Circuit selon la revendication 1 ou 2, comportant en outre :
au moins un deuxième transistor (M2) entre la première borne (12) et la borne de commande du premier transistor (M1), la borne de commande du deuxième transistor étant reliée au deuxième noeud (16) ; et
un deuxième élément résistif (R2), intercalé entre la borne de commande du premier transistor et le deuxième noeud.

5. Circuit selon la revendication 4, comportant en outre un troisième élément résistif (R1) entre le deuxième transistor (M2) et la première borne (12).

6. Circuit selon l'une quelconque des revendications 1 à 5, dans lequel le ou lesdits transistors (M1, M2) sont des transistors à canal N.

7. Circuit selon l'une quelconque des revendications 1 à 6, dans lequel tous les commutateurs (K1, K2, K3, K4, K5) sont des transistors MOS à canal N.

8. Procédé de commande d'un circuit selon l'une quelconque des revendications 1 à 7, dans lequel :
dans une première phase (T1), les premier et deuxième commutateurs (K1, K2) sont ouverts tandis que le troisième commutateur (K3) est fermé ; et
dans une deuxième phase (T2), les premier et deuxième commutateurs (K1, K2) sont fermés tandis que le troisième commutateur (K3) est ouvert.

9. Procédé selon la revendication 8, dans lequel les première et deuxième phases (T1, T2) se répètent.

10. Procédé selon la revendication 8 ou 9, dans lequel des intervalles (Ta, Tb) de durées inférieures à celles des première et deuxième phases (T1, T2), et dans lesquels tous les commutateurs (K1, K2, K3, K4, K5) sont ouverts, sont intercalés entre les phases successives.

11. Procédé selon l'une quelconque des revendications 8 à 10, dans leur rattachement à la revendication 3, dans lequel :
pendant la ou les premières phases (T1), le quatrième commutateur (K4) est ouvert et le cinquième commutateur (K5) est fermé ; et
pendant la ou les deuxièmes phases (T2), le quatrième commutateur (K4) est fermé et le cinquième commutateur (K5) est ouvert.

12. Circuit électronique comportant au moins un circuit conforme à l'une quelconque des revendications 1 à 7.

## Patentansprüche

1. Eine Schaltung zur Erzeugung einer negativen Spannung (V-) aus einer positiven Spannung (V+), wobei folgendes vorgesehen ist:
mindestens ein erster Transistor (M1) zwischen einem ersten Anschluss (12) zum Anlegen eines Potentials höher als ein Bezugs- bzw. Referenzpotential und einem ersten Knoten (15);
ein erstes kapazitives Element (C1) zwischen dem ersten Knoten (15) und einem zweiten Knoten (16), wobei ein Steueranschluss des erwähnten ersten Transistors mit dem zweiten Knoten (16) verbunden ist;
ein erster Schalter (K1) zwischen dem ersten Knoten (15) und einem zweiten Anschluss (14) zum Anlegen eines Bezugspotenzials;
ein zweiter Schalter (K2) zwischen dem zweiten Knoten (16) und einem dritten Anschluss (18) zur Lieferung der erwähnten negativen Spannung;
ein dritter Schalter (K3) zwischen dem zweiten Knoten (16) und dem zweiten Anschluss (14); und
ein zweites kapazitives Element (C2) zwischen dem dritten Anschluss (18) und dem zweiten Anschluss.

2. Die Schaltung nach Anspruch 1, wobei ferner folgendes vorgesehen ist:
ein erstes Widerstandselement (R) zwischen dem ersten Anschluss (12) und dem ersten Transistor (M1).

3. Die Schaltung nach Anspruch 1 oder 2, wobei ferner folgendes vorgesehen ist:
ein vierter Schalter (K4) zwischen dem Steueranschluss des ersten Transistors (M1) und dem zweiten Knoten (16); und
ein fünfter Schalter (K5) zwischen dem Steueranschluss des ersten Transistors (M1) und einem vierten Anschluss (22) zum Anlegen eines Potentials (Vg) höher als das Referenzpotential.

4. Die Schaltung nach Anspruch 1 oder 2, wobei ferner folgendes vorgesehen ist:
mindestens ein zweiter Transistor (M2) zwischen dem ersten Anschluss (12) und dem Steueranschluss des ersten Transistors (M1), wobei der Steueranschluss des zweiten Transistors mit dem zweiten Knoten (16) verbunden ist; und
ein zweites Widerstandselement (R2) angeordnet zwischen dem Steueranschluss des ersten Transistors und dem zweiten Knoten.

5. Die Schaltung nach Anspruch 4, die ferner ein drittes Widerstandselement (R1) zwischen dem zweiten Transistor (M2) und dem ersten Anschluss (12) aufweist.

6. Die Schaltung nach einem der Ansprüche 1 bis 5, wobei der Transistor bzw. die Transistoren (M1, M2) N-Kanal-Transistoren sind.

7. Die Schaltung nach einem der Ansprüche 1 bis 6, wobei alle Schalter (K1, K2, K3, K4, K5) N-Kanal-MOS-Transistoren sind.

8. Ein Verfahren zur Steuerung einer Schaltung nach einem der Ansprüche 1 bis 7, wobei:
in einer ersten Phase (T1) die ersten und zweiten Schalter (K1, K2) ausgeschaltet sind, während der dritte Schalter (K3) eingeschaltet ist; und
wobei in einer zweiten Phase (T2) die ersten und zweiten Schalter (K1, K2) eingeschaltet sind, während der dritte Schalter (K3) ausgeschaltet ist.

9. Das Verfahren nach Anspruch 8, wobei die ersten und zweiten Phasen (T1, T2) wiederholt werden.

10. Das Verfahren nach Anspruch 8 oder 9, wobei Intervalle (Ta, Tb) mit Zeitdauern kürzer als denen der ersten und zweiten Phasen (T1, T2) zwischen den aufeinanderfolgenden Phasen angeordnet sind und wobei alle Schalter (K1, K2, K3, K4, K5) abgeschaltet sind.

11. Das Verfahren nach einem der Ansprüche 8 bis 10 bei Abhängigkeit von Anspruch 3, wobei:
während der ersten Phase(n) (T1) der vierte Schalter (K4) ausgeschaltet ist und der fünfte Schalter (K5) eingeschaltet ist; und wobei
während der zweiten Phase(n) (T2) der vierte Schalter (K4) eingeschaltet ist und der fünfte Schalter (K5) ausgeschaltet ist.

12. Eine elektronische Schaltung, die mindestens eine Schaltung nach irgendeinem der Ansprüche 1 bis 7 aufweist.

## Claims

1. A circuit for generating a negative voltage (V-) from a positive voltage (V+), comprising:
at least a first transistor (M1) between a first terminal (12) of application of a potential higher than a reference potential and a first node (15);
a first capacitive element (C1) between the first node (15) and a second node (16), a control terminal of said first transistor being connected to the second node (16);
a first switch (K1) between the first node (15) and a second terminal (14) of application of the reference potential;
a second switch (K2) between the second node (16) and a third terminal (18) for providing said negative voltage;
a third switch (K3) between the second node (16) and the second terminal (14); and
a second capacitive element (C2) between the third terminal (18) and the second terminal.

2. The circuit of claim 1, further comprising a first resistive element (R) between the first terminal (12) and the first transistor (M1).

3. The circuit of claim 1 or 2, further comprising:
a fourth switch (K4) between the control terminal of the first transistor (M1) and the second node (16); and
a fifth switch (K5) between the control terminal of the first transistor (M1) and a fourth terminal (22) of application of a potential (Vg) higher than the reference potential.

4. The circuit of claim 1 or 2, further comprising:
at least a second transistor (M2) between the first terminal (12) and the control terminal of the first transistor (M1), the control terminal of the second transistor being connected to the second node (16); and
a second resistive element (R2), interposed between the control terminal of the first transistor and the second node.

5. The circuit of claim 4, further comprising a third resistive element (R1) between the second transistor (M2) and the first terminal (12).

6. The circuit of any of claims 1 to 5, wherein said transistor(s) (M1, M2) are N-channel transistors.

7. The circuit of any of claims 1 to 6, wherein all switches (K1, K2, K3, K4, K5) are N-channel MOS transistors.

8. A method for controlling the circuit of any of claims 1 to 7, wherein:
in a first phase (T1), the first and second switches (K1, K2) are off while the third switch (K3) is on; and
in a second phase (T2), the first and second switches (K1, K2) are on while the third switch (K3) is off.

9. The method of claim 8, wherein the first and second phases (T1, T2) are repeated.

10. The method of claim 8 or 9, wherein intervals (Ta, Tb) having durations shorter than those of the first and second phases (T1, T2), and wherein all switches (K1, K2, K3, K4, K5) are off, are interposed between the successive phases.

11. The method of any of claims 8 to 10 and of claim 3, wherein:
during the first phase(s) (T1), the fourth switch (K4) is off and the fifth switch (K5) is on; and
during the second phase(s) (T2), the fourth switch (K4) is on and the fifth switch (K5) is off.

12. An electronic circuit comprising at least one circuit of any of claims 1 to 7.
